# EUROPÄISCHE PATENTSCHRIFT

(11) **EP 1 224 546 B1**
(45) Veröffentlichungstag und Bekanntmachung des Hinweises auf die Patenterteilung: **02.09.2015**
(21) Anmeldenummer: 00960677.3
(22) Anmeldetag: 18.09.2000
(51) Int. Cl.: G06F 11/00, G06F 11/28

(54) **VERFAHREN ZUR SICHERUNG EINES PROGRAMMABLAUFS**
METHOD FOR PROTECTING A PROGRAM FLOW
PROCEDE DE PROTECTION DU DEROULEMENT D'UN PROGRAMME

(30) Priorität: 20.09.1999 DE 19944991
(43) Veröffentlichungstag der Anmeldung: 24.07.2002
(73) Patentinhaber: Giesecke & Devrient GmbH, 81677 München (DE)
(72) Erfinder: BALDISCHWEILER, Michael, 81825 München (DE)
(86) Internationale Anmeldenummer: PCT/EP2000/009131
(87) Internationale Veröffentlichungsnummer: WO 2001/022223

(56) Entgegenhaltungen:
- US-A- 5 651 111
- US-A- 5 715 389
- US-A- 5 761 414
- US-A- 5 768 591
- US-A- 5 909 580

## Beschreibung

Die vorliegende Erfindung betrifft ein Verfahren zur Sicherung des Programmablaufs gemäß Anspruch 1.

Insbesondere bei sicherheitsrelevanten Anwendungen, beispielsweise im Bereich von IC-Karten ist es notwendig, den Programmablauf vor unerlaubten Manipulationen zu schützen. Zum Schutz geheimer Daten, beispielsweise geheimer Schlüsseldaten, ist es bekannt, die zu schützenden Daten verschlüsselt abzulegen, um ein Auslesen durch Unberechtigte zu verhindern.

Der Zugriff auf geheime Daten kann jedoch auch dadurch erfolgen, daß der Programmablauf gezielt unterbrochen wird, so daß Fehler in den Verschlüsselungsroutinen entstehen, aus denen nach mehrmaliger gezielter Unterbrechung auf die geheimen Daten rückgeschlossen werden kann.

Zur Vermeidung derartiger Angriffe ist es notwendig, Fehler oder Störungen des Programmablaufs sicher zu erkennen. Aus der deutschen Patentschrift DE 37 09 524 C2 ist ein Verfahren zur Überprüfung der Speicherzelleninhalte eines Programmspeichers in einem Rechner bekannt. Dort werden mehrere Prüfsummen abgespeichert, welche aus Speicherzelleninhalten von unterschiedlichen Adreß- und Datenspeicherbereichen gebildet werden. Die Prüfsummen werden zu Beginn und/oder während des Rechnerbetriebs ermittelt und mit der abgespeicherten Prüfsumme verglichen. Bei Feststellung einer Abweichung wird ein Fehlersignal ausgegeben.

Das aus der DE 37 09 524 C2 bekannte Verfahren eignet sich hauptsächlich dazu, die Richtigkeit von Daten, welche in einem Programm verwendet werden, zu überprüfen. Es wird außer Acht gelassen, daß auch bzw. insbesondere bei Programmaufrufen, d.h. bei der Ausführung von Unter- oder Funktionsprogrammen eine Manipulation des Programmablaufs erfolgen kann.

Aus dem US-Patent US-PS 5,715,389 ist ein On-Line-Überwachungssystem für Computersysteme bekannt, bei dem die Zeit, welche für den Ablauf eine Programms benötigt wird, ermittelt und mit einer vorgegebenen Zeit verglichen wird. Ein funktionaler Fehler bzw. mangelnde Verarbeitungseffizienz wird erkannt, wenn das überwachte Programm für seine Ausführung längere Zeit benötigt, als vorgesehen.

Es ist deshalb Aufgabe der vorliegenden Erfindung, ein Verfahren anzugeben, das die sichere Überprüfung von modular aufgebauten Programmen, insbesondere bei Unterprogrammaufrufen, zuläßt.

Gemäß der Erfindung wird diese Aufgabe gelöst, indem vom aufgerufenen Programm eine Datenüberprüfung ausgeführt wird, welche den sicheren Übergang der vom aufrufenden Programm zu übergebenden Daten feststellt.

Durch die Erfindung wird eine zusätzliche Sicherheit erreicht, die nicht nur gewährleistet, daß einzelne Programmteile sicher und vollständig ausgeführt werden, sondern daß der gesamte Programmablauf ungestört und frei von Manipulationen ablaufen kann.

Die Erfindung sieht vor, daß über die vom aufrufenden Programm an das aufgerufene Programm übergebenen Parameter zunächst vom aufrufenden Programm eine Checksumme gebildet wird, welche in einem dafür vorgesehenen Speicherbereich abgelegt wird. Nach Übergabe der Parameter wird auch vom aufgerufenen Programm über die erhaltenen Parameter eine Checksumme gebildet. Für den Fall, daß die vom aufrufenden und aufgerufenen Programm gebildeten Checksummen unterschiedlich sind, wird das Programm abgebrochen.

Auf diese Weise kann sichergestellt werden, daß ein Funktionsprogramm, insbesondere ein Funktionsprogramm, welches sicherheitsrelevante Daten abarbeitet, bereits zu Beginn auf Manipulationen hin untersucht wird, so daß der Start des aufgerufenen Programms mit fehlerhaften Parametern von vornherein verhindert werden kann und eine Auswertung der fehlerbehafteten Daten nicht ermöglicht wird.

Vorzugsweise wird der Speicherbereich, welcher zur Ablage der Checksumme vorgesehen ist, in einem RAM- oder Registerbereich angelegt.

Eine weitere oder alternative Ausführungsform zur Bildung der Checksumme über die zu übergebenden Parameter ergibt sich aus der Überprüfung der Rücksprungadressen. Dabei werden die Rücksprungadressen der aufrufenden Funktionen in einer Tabelle eingetragen und vom aufgerufenen Programm kann mittels dieser Tabelle überprüft werden, ob die vom aufrufenden Programm übermittelte Rücksprungadresse in der Tabelle vorhanden ist. Bei einer fehlerhaft mitgeteilten Rücksprungadresse kann das Programm unterbrochen werden.

Eine zusätzliche Sicherheitsüberprüfung kann erfolgen, indem bei Aufruf eines Unterprogramms bzw. eines Funktionsprogramms ein Timer gestartet wird. Dieser Timer zählt die Taktzyklen, welche für die Ausführung des Programms notwendig sind. Es wird dabei zunächst als Grenzwert für den Timer die für den regulären Unterprogrammablauf benötigte Anzahl der Taktzyklen als Grenzwert vorgegeben. Das Programm wird abgebrochen, wenn vor Beendigung des Unterprogramms die Anzahl der vorgegebenen Taktzyklen überschritten wurde.

In vorteilhafter Weise wird auch an bestimmten, vorgegebenen Stellen des Unterprogramm der Timerwert ausgelesen und mit ebenfalls vorgegebenen Zwischenwerten verglichen. Auch in diesem Fall wird das Programm abgebrochen, wenn der vorgegebene Zwischenwert überschritten wurde.

Im folgenden wird die Erfindung anhand der Fig.1 bis 3 näher erläutert.

Es zeigen:
- Figur 1:: Ablaufdiagramm für die Überprüfung mittels Prüfsumme
- Figur 2:: Ablauf für die Überprüfung mittels Rücksprungadressentabelle
- Figur 3:: Ablauf für die Überprüfung mittels Timer.

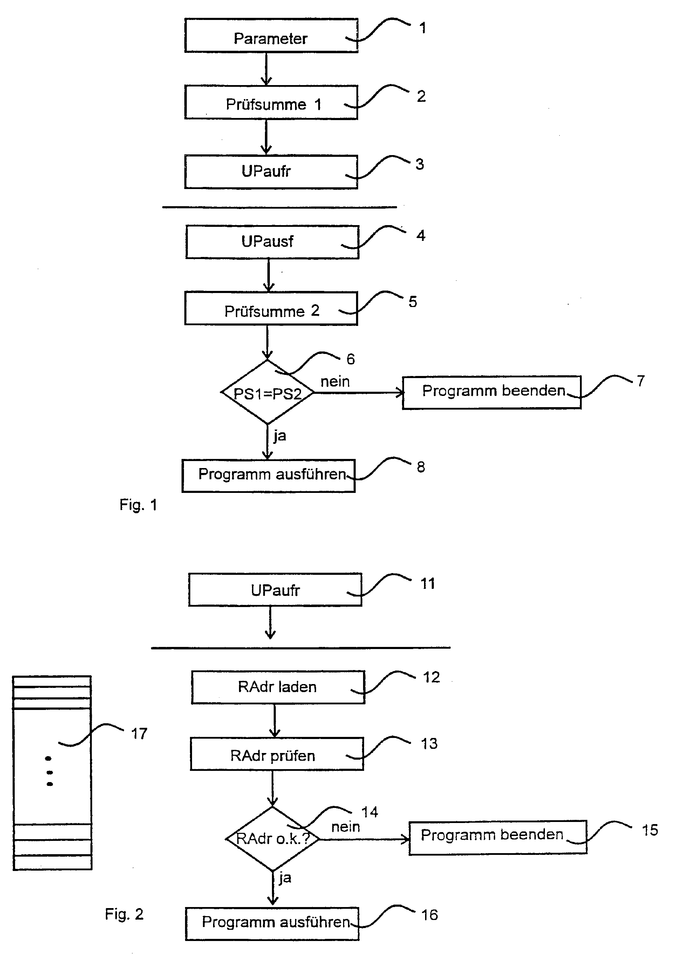

In Figur 1 ist der Ablauf eines Unterprogrammmaufrufs, insbesondere eines Funktionsaufrufs beschrieben, wobei die Funktionsschritte 1 bis 3 das aufzurufende Programm betreffen und die Funktionsschritte 4 bis 8 die Auswertung des Unterprogramms betreffen.

Im aufzurufenden Programm werden zunächst in Schritt 1 die für die Ausführung des Unterprogramms notwendigen Parameter bereitgestellt. Für diese Parameter wird in Schritt 2 eine Prüfsumme gebildet, die im einfachsten Fall aus einem Parity-check bestehen kann. Im weiteren sind selbstverständlich die gängigen Verfahren zur Prüfsummenbildung, z.B. CRC (Cyclical Redundancy Check) oder EDC einsetzbar. Die so ermittelte Prüfsumme (Checksumme) wird in einen dafür vorgesehenen Speicherbereich eingeschrieben. Bei diesem Speicherbereich kann es sich um einen flüchtigen Speicher (RAM) oder auch um einen nichtflüchtigen, wiederbeschreibbaren Speicher (z.B. EEPROM) handeln.

In Anschluß an die Bildung und Abspeicherung der Prüfsumme 1 erfolgt der Unterprogrammaufruf in Schritt 3. Schritt 4 stellt den Beginn der Ausführung des Unterprogramms dar. In diesem Unterprogramm wird zunächst die Prüfsumme 2 über die übergebenen Parameter gebildet. Diese Prüfsumme wird mit dem gleichen Verfahren gebildet, mit dem auch die Prüfsumme 1 im aufrufenden Programm ermittelt wurde.

Als nächstes erfolgt in Schritt 6 eine Überprüfung der Prüfsummen PS1 und PS2 auf Gleichheit. Wird in diesem Schritt 6 festgestellt, daß die beiden Prüfsummen ungleich sind, kann davon ausgegangen werden, daß bei der Übergabe der Programmparameter ein Fehler aufgetreten ist, welcher ein Hinweis auf eine beabsichtigte Störung mit dem Ziel, Geheimdaten zu ermitteln, sein kann. Als Maßnahme kann in Schritt 7 das Programm beendet werden oder es werden entsprechende alternative Maßnahmen getroffen, beispielsweise eine Fehlermeldung an das Hauptprogramm.

Wird in Schritt 6 festgestellt, daß die Prüfsummen PS1 und PS2 gleich sind, wird mit der eigentlichen Funktionsausführung begonnen.

Die Figur 2 zeigt eine Möglichkeit der Programmsicherung durch Überprüfen der Rücksprungadressen. Rücksprungadressen werden beim Funktionsaufruf per Hardware auf den Stack gelegt. Im vorliegenden Fall werden also im Schritt 11 beim Unterprogrammaufruf, ebenfalls die Informationen vom aufrufenden Programm (z.B. Rücksprungadressen) an das Unterprogramm übergeben. Gemäß der Erfindung werden die Rücksprungadressen in einer Tabelle 17 verwaltet und bei der Ausführung des Unterprogramms werden zunächst in Schritt 12 die Rücksprungadressen - soweit sie im RAM abgelegt sind - auf Konsistenz hin untersucht, um sie in Schritt 13 anhand der Tabelle 17 zu überprüfen. Wenn in Schritt 14 festgestellt wurde, daß die übergebene Rücksprungadresse nicht in der Tabelle vorhanden ist, wird mit Schritt 15 das Programm beendet, andernfalls wird in Schritt 16 mit der Ausführung des Funktionsprogramms begonnen.

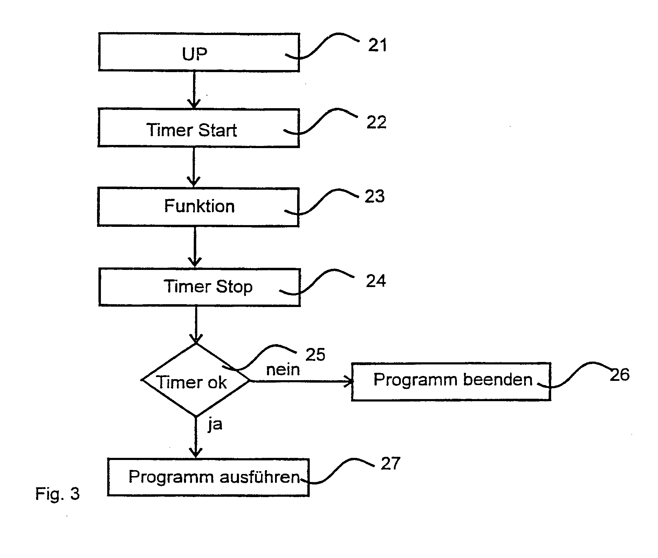

Die Figur 3 zeigt eine Ausgestaltung, bei der der richtige Programmablauf bzw. der ungestörte Programmablauf mittels eines Timers überprüft wird. Unmittelbar nach dem Start des Unterprogramms in Schritt 21 wird in Schritt 22 ein Timer gestartet. Dieser Timer ist ausgelegt, die Zeit zu messen bzw. die Tatktzyklen zu zählen, welche für die Ausführung des Unterprogramms benötigt werden. Im Anschluß an den Start des Timers in Schritt 22 wird mit Schritt 23 die Funktion des Unterprogramms ausgeführt und nach Beendigung der Funktion wird in Schritt 24 der Timer gestoppt. In Schritt 25 wird überprüft, ob die Anzahl der Taktzyklen, welche für die Ausführung des Funktionsprogramms benötigt wurden, mit der vorgegebenen Anzahl von Taktzyklen übereinstimmt. Für den Fall, daß keine Übereinstimmung besteht, wird das Programm mit Schritt 26 beendet. Im anderen Fall wird in Schritt 27 mit der Programmausführung fortgefahren, beispielsweise indem zum Hauptprogramm zurückgesprungen wird.

In der Figur 3 ist dargestellt, daß der Timer nach Ablauf der Funktion bzw. des Funktionsprogramms gestoppt und überprüft wird. In der Praxis kann die Sicherheit erhöht werden, indem bestimmte Stellen im Funktionsprogramm vorgesehen werden, an denen der Timer zusätzlich überprüft wird. Damit kann gegebenenfalls verhindert werden, daß das Funktionsprogramm trotz eines Fehlers oder Angriffs weitgehend ausgeführt wird.

Alternativ kann auch vorgesehen werden, daß der Timerwert nach dem Start kontinuierlich mit einem Grenzwert verglichen wird und das Programm abgebrochen wird, wenn dieser Grenzwert erreicht bzw. überschritten wurde.

Die einzelnen Ausführungsbeispiele nach den Figuren 1 bis 3 wurden als eigenständige, alternative Maßnahmen dargestellt. Die Sicherheit kann erhöht werden, indem die Ausführungsbeispiele kombiniert werden. Größte Sicherheit bildet die parallele Überprüfung mittels Prüfsumme, Rücksprungadressenprüfung und Timerüberprüfung.

## Patentansprüche

1. Verfahren zur Sicherung eines Programmablaufs gegen unerlaubte Manipulationen beim Aufruf von Unterprogrammen, wobei ein aufgerufenes Unterprogramm vor bzw. während der Programmausführung eine Überprüfung der vom aufrufenden Programm direkt oder indirekt übermittelten Daten ausführt **dadurch gekennzeichnet, daß**
- das aufrufende Programm über die zu übergebenden Parameter eine erste Checksumme bildet (Schritt 2),
- diese erste Checksumme in einem dafür vorgesehenen Speicherbereich abgelegt wird,
- das aufgerufene Unterprogramm vor seiner Ausführung über die erhaltenen Parameter eine zweite Checksumme (Schritt 5) bildet und auf Gleichheit mit der ersten Checksumme (Schritt 6) überprüft und
- bei Ungleichheit der ersten und der zweiten Checksumme das Programm abgebrochen (Schritt 7) oder eine Fehlermeldung ausgegeben wird.

2. Verfahren nach Anspruch 1 **dadurch gekennzeichnet, daß** bei Aufruf des Unterprogramms ein Timer gestartet wird (Schritt 22), welcher die für die Ausführung des Unterprogramms benötigte Anzahl von Taktzyklen zählt und das Programm abbricht, wenn vor Beendigung des Unterprogramms eine vorgegebene Anzahl der Taktzyklen überschritten wurde (Schritt 26).

3. Verfahren nach Anspruch 1, **dadurch gekennzeichnet, daß** der Speicherbereich zur Ablage der Checksumme ein RAM- oder Registerbereich ist.

4. Verfahren nach einem der Ansprüche 1 bis 3, **dadurch gekennzeichnet, daß** die Rücksprungadressen der aufrufenden Funktion in einer Tabelle eingetragen werden und das aufgerufene Unterprogramm die vom aufrufenden Programm mitgeteilte Rücksprungadresse überprüft (Schritt 13), indem das Vorhandensein dieser Rücksprungadresse anhand der Tabelle überprüft wird.

5. Verfahren nach Anspruch 2 oder 4 in der Abhängigkeit von Anspruch 2, **dadurch gekennzeichnet, daß** der Timerwert an bestimmten, vorgegebenen Stellen ausgelesen (Schritt 24) und mit einem ebenfalls vorgegebenen Zwischenwert verglichen wird (Schritt 25) und das Unterprogramm abgebrochen wird, wenn der vorgegebene Zwischenwert überschritten wurde (Schritt 26).

## Claims

1. A method for securing a program sequence against illegal manipulations upon calling sub-programs, wherein, before or during the program execution, a called sub-program executes a check of the data transmitted directly or indirectly by the calling program, **characterized in that**
- the calling program forms a first checksum (step 2) over the parameters to be transferred,
- this first checksum is stored in a memory area provided for this purpose,
- the called sub-program forms a second checksum (step 5) over the received parameters before its execution, checking said checksum for consistency with the first checksum (step 6), and
- if the first and the second checksum are inconsistent, the program is aborted (step 7) or an error message is output.

2. The method according to claim 1, **characterized in that** upon calling the sub-program, a timer is started (step 22), which counts the number of clock cycles required for executing the sub-program and aborts the program if, before the conclusion of the sub-program, a predetermined number of the clock cycles has been exceeded (step 26).

3. The method according to claim 1, **characterized in that** the memory area for storing the checksum is a RAM or register area.

4. The method according to any of the claims 1 to 3, **characterized in that** the return addresses of the calling function are entered in a table, and the called sub-program checks the return address indicated by the calling program (step 13) by checking the existence of this return address by means of the table.

5. The method according to claim 2 or 4 in dependence on claim 2, **characterized in that** the timer value is read out at certain, predetermined stages (step 24) and compared to a likewise predetermined intermediate value (step 25), and the sub-program is aborted, if the predetermined intermediate value has been exceeded (step 26).

## Revendications

1. Procédé de protection d'un déroulement de programme contre des manipulations non autorisées lors de l'appel de sous-programmes, un sous-programme appelé exécutant avant ou pendant l'exécution du programme une vérification des données transmises directement ou indirectement par le programme appelant, **caractérisé en ce que**
- le programme appelant constitue (étape 2) avec les paramètres à remettre une première somme de contrôle,
- cette première somme de contrôle est stockée dans une zone de mémoire prévue à cet effet,
- le programme appelé constitue avant son exécution, avec les paramètres reçus, une deuxième somme de contrôle (étape 5) et en vérifie l'égalité avec la première somme de contrôle (étape 6) et
- en cas d'inégalité entre la première et la deuxième somme de contrôle, le programme est interrompu (étape 7) ou bien un message d'erreur est émis.

2. Procédé selon la revendication 1, **caractérisé en ce que**, lors de l'appel du sous-programme, une minuterie est démarrée (étape 22), laquelle compte le nombre de cycles d'horloge nécessaire à l'exécution du sous-programme et interrompt le programme si un nombre préfixé des cycles d'horloge a été dépassé (étape 26) avant l'achèvement du sous-programme.

3. Procédé selon la revendication 1, **caractérisé en ce que** la zone de mémoire destinée au stockage de la somme de contrôle est une zone RAM ou zone de registre.

4. Procédé selon une des revendications de 1 à 3, **caractérisé en ce que** les adresses de retour de la fonction appelante sont enregistrées dans une table et **en ce que** le programme appelé vérifie (étape 13) l'adresse de retour communiquée par le programme appelant, ce qui a lieu **en ce que** l'existence de cette adresse de retour est vérifiée au moyen de la table.

5. Procédé selon la revendication 2 ou 4 dans la dépendance de la revendication 2, **caractérisé en ce que** la valeur de la minuterie est lue (étape 24) à des endroits déterminés préfixés et est comparée (étape 25) avec une valeur intermédiaire également préfixée et **en ce que** le sous-programme est interrompu si la valeur intermédiaire préfixée a été dépassée (étape 26).
